# EUROPEAN PATENT APPLICATION

(11) **EP 4 764 446 A1**
(43) Date of publication of application: **24.06.2026**
(21) Application number: 25225862.9
(22) Date of filing: 19.12.2025
(51) Int. Cl.: G01M 13/021, B64F 5/60, F02C 7/36, G01M 15/14, G01M 15/02

(54) **SYSTEM AND METHOD FOR MEASURING BACKLASH BETWEEN A BEVEL GEAR AND A RING BEVEL GEAR WITHIN A GEARBOX HOUSING OF A GAS TURBINE ENGINE**

(30) Priority: 19.12.2024 US 202418987374
(71) Applicant: Pratt & Whitney Canada Corp., (01BE5) Longueuil, QC J4G 1A1 (CA)
(72) Inventor: POKRZYWA, Lukasz, (01BE5) Longueuil, J4G 1A1 (CA); SZUL, Rafal, (01BE5) Longueuil, J4G 1A1 (CA); SUTTON, Xavier Lemieux, (01BE5) Longueuil, J4G 1A1 (CA)
(74) Representative: Dehns

(57) **Abstract**

A system (100) for measuring a gear backlash, having a connecting member (140) with: a lower portion (150), defining an engaging plate (160) with an aperture (165), positioned against a front end (120A) of a bevel gear (120); and an upper portion (170) for installing the engaging plate (160); a gauge body (190) positioned against an accessory pad (200) of a gearbox housing (130); a shaft system (210) extending through the gauge body (190), into the gearbox housing (130), having aft (220) and front (230) ends, and a sidewall (222): the aft end (220) extends aft of the gauge body (190) and rotates the shaft system (210); the front end (230) has: a first portion (240) that engages the plate aperture (165) when the shaft system (210) is rotated, biasing the engaging plate (160) against the bevel gear front end (120A); a second portion (250) engages a bevel gear shaft (120B) when the engaging plate (160) is biased; and a sensor (260), connected to the system aft end (220), that measures rotation of the shaft system (210) relative to the gauge body (190).

## Description

### BACKGROUND

The embodiments are directed to a gearbox of a gas turbine engine and more specifically to a system and method for measuring backlash between a bevel gear and a ring bevel gear within a gearbox housing of a gas turbine engine.

In a gas turbine engine, components, such gearing in gearbox housings that transfers power from the center driveshaft to accessories mounted to the gearbox should have limited backlash. It is helpful to measure the backlash for determining whether any corrective action need be taken prior to attaching the gearbox to the engine.

### BRIEF DESCRIPTION

According to one aspect of the present invention, there is provided a system for measuring a backlash between a ring bevel gear and bevel gear within a gearbox housing of a gas turbine engine, the system including: a connecting member having: a lower portion defining an engaging plate with a threaded plate aperture, wherein the lower portion is configured for being positioned against a front end of the bevel gear; and an upper portion defining a grippable tool for installation of the engaging plate; a gauge body configured for being positioned against an accessory pad of the gearbox housing; a shaft system configured for extending forward, through the gauge body, into the gearbox housing, the shaft system having an aft end, a front end, and a sidewall therebetween, wherein: the aft end of the shaft system extends aft of the gauge body, wherein the aft end is engageable to rotate the shaft system; and the front end of the shaft system has: a first portion that is threaded and configured to engage the threaded plate aperture of the engaging plate when the shaft system is rotated, to bias the engaging plate against the front end of the bevel gear; and a second portion configured to engage a bevel gear shaft of the bevel gear when the engaging plate is biased against the front end of the bevel gear, and thereby bias the bevel gear against the ring bevel gear; and a sensor, connected to the aft end of the shaft system, configured to measure rotation of the shaft system relative to the gauge body during rotation of the handle, indicative of the backlash between the ring bevel gear and the bevel gear.

Optionally, and in accordance with the above, in operation, when the second portion of the front end of the shaft system engages the bevel gear shaft, rotation of the handle enables identifying the backlash between the ring bevel gear and the bevel gear.

Optionally, and in accordance with any of the above, the gauge body is cup-shaped or hat-shaped and extends from a body forward end to a body aft end, with a body sidewall therebetween, wherein the body forward end defines a base with the body aperture and the body aft end defines an annular rim, whereby the gauge body defines a cavity, wherein the base is configured for being positioned against the accessory pad of the gearbox housing and the shaft system is configured to extend through the threaded plate aperture; and a biasing member is disposed in the cavity to bias the shaft system in an aft direction when the engaging plate is biased against the front end of the bevel gear.

Optionally, and in accordance with any of the above, the system including a bearing disposed within the body aperture, surrounding a portion of the shaft system.

Optionally, and in accordance with any of the above, the gauge body is hat-shaped such that the base has a base perimeter that is larger than a rim diameter defined by the rest of the gauge body to seat fasteners that fix the gauge body to the gearbox housing.

Optionally, and in accordance with any of the above, the shaft system defines a flange that is located within the cavity when the engaging plate is biased against the front end of the bevel gear, and the biasing member is a spring disposed within the cavity, extending between the base of the gauge body and the flange.

Optionally, and in accordance with any of the above, the system including: a forward thrust bearing disposed within the cavity, between the spring and the base of the gauge body; and an aft thrust bearing disposed within the cavity, between the spring and the flange.

Optionally, and in accordance with any of the above, the second portion of the front end of the shaft system is a radially expandable stub shaft extending from a forward stub shaft flange to an aft stub shaft flange, with the sidewall extending therebetween; the forward stub shaft flange is supported by the engaging plate; and the aft stub shaft flange engages the bevel gear shaft of the bevel gear when the engaging plate is biased against the front end of the bevel gear, to bias the bevel gear toward the ring bevel gear.

Optionally, and in accordance with any of the above, the engaging plate includes: a plate base that is planar; an outer plate flange extending aft of the plate base and is configured to engage the bevel gear; an inner plate flange extending aft of the plate base and surrounded by the outer plate flange, wherein the inner plate flange surrounds the threaded plate aperture, wherein the outer plate flange and the inner plate flange are each shaped as an annular ring, and a plate cavity is disposed between the outer plate flange and the inner plate flange, and wherein the forward stub shaft flange is supported within the plate cavity.

Optionally, and in accordance with any of the above, the sidewall of the shaft system defines an outer surface, wherein a third portion of a forward end of the shaft system that is aft of the first portion defines a taper angle that narrows toward the first portion; and when the aft end of the shaft system is rotated, and the first portion of the shaft system engages the threaded plate aperture of the engaging plate, the shaft system is biased forward, whereby the third portion of the forward end of the shaft system engages the aft stub shaft flange, and whereby the aft stub shaft flange gradually engages the bevel gear shaft of the bevel gear due to the taper angle, to gradually bias the bevel gear toward the ring bevel gear.

Optionally, and in accordance with any of the above, the shaft system includes: an outer shaft that extends from an outer shaft forward end to an outer shaft aft end with an outer surface therebetween defined by the outer surface of the sidewall of the shaft system, and a flange extends outwardly from the outer surface, wherein the outer shaft forward end defines the third portion of a forward end of the shaft system, to thereby define the taper angle; and an inner shaft that extends from an inner shaft forward end to an inner shaft aft end, with an inner shaft sidewall therebetween, wherein the inner shaft extends through the outer shaft and is fixed to the outer shaft, wherein the inner shaft is longer than the outer shaft, such that the inner shaft forward end extends forward of the outer shaft forward end and defines the first portion of the shaft system.

Optionally, and in accordance with any of the above, the inner shaft aft end extends aft of the outer shaft aft end to define a shaft aft extension; and a turn knob is connected to the shaft aft extension to rotate the shaft system, to bias the engaging plate against the front end of the bevel gear.

Optionally, and in accordance with any of the above, the turn knob and the inner shaft aft end are connected to each other via a pin.

Optionally, and in accordance with any of the above, the lower portion and the upper portion of the connecting member are detachable from each other.

According to another aspect of the present invention, there is provided a method of measuring a backlash between a ring bevel gear and bevel gear within a gearbox housing of a gas turbine engine, the method including: inserting a connecting member into the gearbox housing so that an engaging plate with a threaded plate aperture defined by a lower portion of the connecting member is positioned against a front end of the bevel gear; and positioning a gauge body against an accessory pad of the gearbox housing or against a shim plate disposed against the accessory pad so that a shaft system extends forward, through the gauge body, into the gearbox housing, rotating the shaft system so that a first portion of a front end of the shaft system engages the threaded plate aperture of the engaging plate, whereby: the engaging plate is biased against the front end of the bevel gear; a second portion of the shaft system engages a bevel gear shaft of the bevel gear, thereby biasing the bevel gear against the ring bevel gear; and measuring, with a sensor, connected to an aft end of the shaft system, rotation of the shaft system relative to the gauge body during rotation of the handle, to identify the backlash between the ring bevel gear and the bevel gear.

Optionally, and in accordance with any of the above, the method includes turning a knob at an aft end of the shaft system to rotate the shaft system.

Optionally, and in accordance with any of the above, inserting the connecting member into the gearbox housing includes positioning a forward flange of a radially expandable stub shaft, that is defined by the second portion of the shaft system, and that is supported by the engaging plate into the gearbox housing so that an aft flange of the radially expandable stub shaft engages the bevel gear shaft of the bevel gear.

Optionally, and in accordance with any of the above, the method includes rotationally locking the ring bevel gear prior to rotating the handle, to identify the backlash between the ring bevel gear and the bevel gear.

### BRIEF DESCRIPTION OF THE DRAWINGS

The following descriptions should not be considered limiting in any way. With reference to the accompanying drawings, like elements are numbered alike:
FIG. 1 is a cross-sectional view of a gas turbine engine;
FIG. 2 shows a gearbox of the gas turbine engine having a ring bevel gear and bevel gear that may have a backlash that is measured by the disclosed system;
FIG. 3 shows details of the gearbox utilizing the disclosed system for measuring backlash between the ring bevel gear and the bevel gear;
FIG. 4 shows additional details of an aft portion of the system for measuring backlash between the ring bevel gear and the bevel gear;
FIG. 5 shows additional details of a forward portion of the system for measuring backlash between the ring bevel gear and the bevel gear;
FIG. 6 shows additional details of a shaft system of the disclosed system for measuring backlash between the ring bevel gear and the bevel gear;
FIG. 7 shows the disclosed system being installed in the gearbox;
FIG.8 shows the disclosed system as installed in the gearbox; and
FIG. 9 is a flowchart showing a method of measuring backlash between a ring bevel gear and bevel gear in the gearbox.

### DETAILED DESCRIPTION

A detailed description of one or more embodiments of the disclosed apparatus and method are presented herein by way of exemplification and not limitation with reference to the Figures.

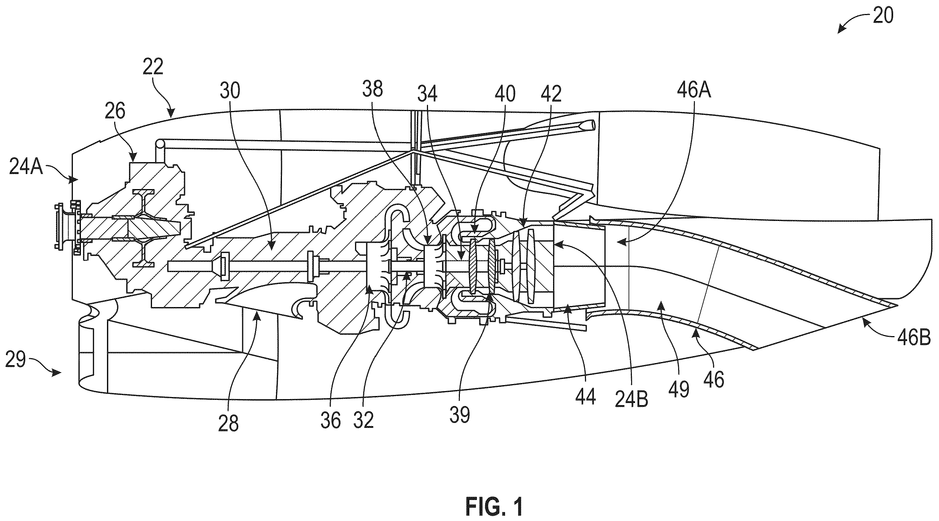

FIG. 1 schematically illustrates a turboprop engine 20, which is a type of gas turbine engine. The engine 20 includes a nacelle 22. Housed within the nacelle 22 is a core 24 extending from a forward end 24A to an aft end 24B. The core 24 includes a reduction gearbox (for simplicity, a gearbox) 26, an air inlet 28 that receives an airflow 29, a power turbine shaft 30, low pressure compressor shaft 32 and a high pressure compressor shaft 34. These shafts are operationally coupled to a low pressure compressor 36 and a high pressure compressor 38. The engine 20 includes a low pressure turbine 39, a high pressure turbine 40 and a power turbine 42. The aft end 24B of the core includes a primary exit exhaust nozzle 44 and an ejector 46, i.e., a secondary exhaust nozzle. The ejector 46 extends from a front end 46A to an aft end 46B. At least at the front end 46A, a cross section 49 of the ejector 46 is circular.

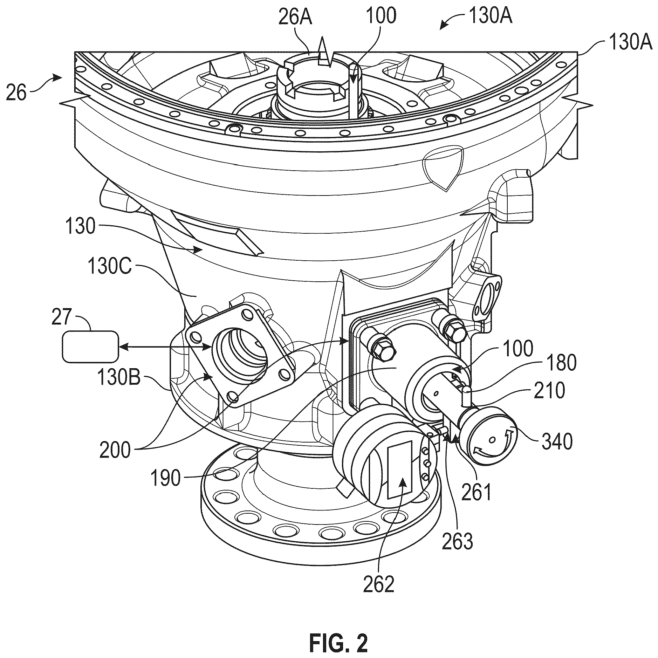

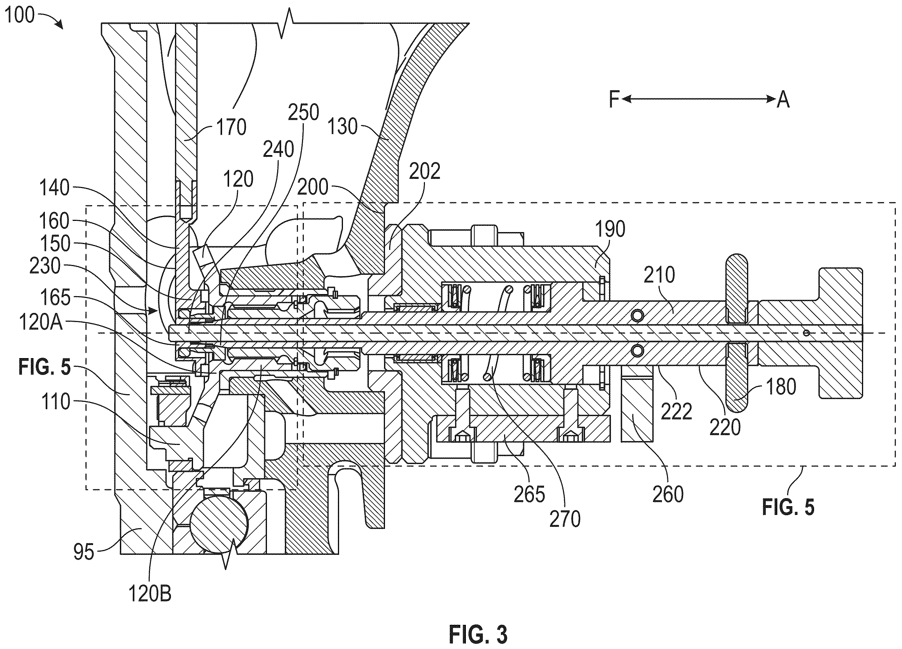

Turning to FIG. 2 additional aspects of the gearbox 26 are shown. A housing 130 extends from a front end 130A to an aft end 130B with a sidewall 130C extending therebetween. The gearbox 26 has a center driveshaft 26A that drives a ring bevel gear 110 (partially shown in, e.g., FIG. 3), which in turn drives a bevel gear 120 (shown in, e.g., FIG. 3) to dive an accessory 27 mounted to an accessory pad 200 formed on the gearbox 26. A system 100 for measuring a backlash between the ring bevel gear 110 and the bevel gear 120 is partially shown. Specifically, a knob 340 enabled by a user is shown to cause the shaft system 210 and the bevel gear 120 to engage each other.

A handle 180 is shown to turn the bevel gear 120 while the ring bevel gear 110 is prevented from moving. The extent of the handle 180 movement, e.g., the backlash, causes movement of a gauge arm 261, which is visible via an inspection point 263 and graphically illustrated on a dial indicator 262. Other aspects of the system 100 shown in FIG. 2 include a gauge body 190 and the shaft system 210 that extends through the gauge body 190 to engage the bevel gear 120. The knob 340 is connected to the shaft system 210. More deals of this configuration is shown below.

Turning to FIG. 3 additional details are provided of the system 100 for measuring the backlash between the ring bevel gear 110 and the bevel gear 120 within the gearbox housing 130 of the gas turbine engine 20. A propeller shaft 95 may be located at the front end of the gearbox 26. The system 100 includes a connecting member 140. The connecting member 140 has a lower portion 150 defining an engaging plate 160 with a threaded plate aperture 165. The lower portion 150 is configured for being positioned against a front end 120A of the bevel gear 120. The connecting member 140 has an upper portion 170, which is a grippable tool, shaped similar to a rod or bar, used for installation of the engaging plate 160. A gauge body 190 configured for being positioned against the accessory pad 200 of the gearbox housing 130 or against a shim plate 202 disposed against the accessory pad 200.

The shaft system 210 is configured for extending forward, through the gauge body 190, into the gearbox housing 130. The shaft system 210 has an aft end 220, a front end 230, and a sidewall 222 extending therebetween. The aft end 220 extends aft of the gauge body 190. The aft end 220 is engageable to rotate the shaft system 210.

The front end 230 has a first portion 240 that is threaded and configured to engage the threaded plate aperture 165 of the engaging plate 160 when the shaft system 210 is rotated. This will bias the engaging plate 160 against the front end 120A of the bevel gear 120. A second portion 250 of the front end 230 is configured to engage a bevel gear shaft 120B of the bevel gear 120 when the engaging plate 160 is biased against the front end 120A of the bevel gear 120. This will bias the bevel gear 120 against the ring bevel gear 110.

In operation, when the second portion 250 of the front end 230 of the shaft system 210 engages the bevel gear shaft 120B, rotation the handle 180 enables identifying the backlash between the ring bevel gear 110 and the bevel gear 120.

The system 100 further includes a sensor 260, which may be considered a combination of the gauge arm 261, inspection point 263 and dial indicator 262 shown in FIG. 2. The sensor 260 is connected to the aft end 220 of the shaft system 210, and configured to measure rotation of the shaft system 210 relative to the gauge body 190 during rotation of the handle 180. As indicated, this is indicative of the backlash between the ring bevel gear 110 and the bevel gear 120.

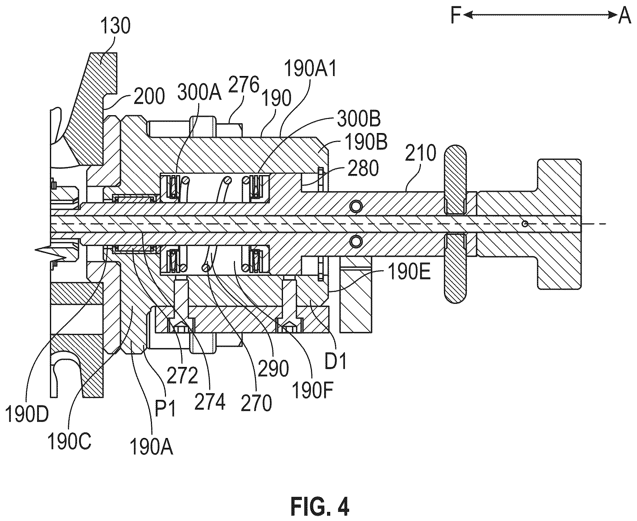

Turning to FIG. 4, the gauge body 190 is cup shaped or hat shaped and extends from a body forward end 190A, to a body aft end 190B, with a body sidewall 190A1 therebetween. The body forward end 190A defines a base 190C with a body aperture 190D and the body aft end 190B defines an annular rim 190E. With this configuration, the gauge body 190 defines an inner cavity 190F.

The base 190C is configured for being positioned against the accessory pad 200 of the gearbox housing 130. The shaft system 210 is configured to extend through the threaded plate aperture 165. A biasing member 270 is disposed in the inner cavity 190F to bias the shaft system 210 in an aft direction A when the engaging plate 160 is biased against the front end 120A of the bevel gear 120. This stabilizes motion of the shaft system 210 and engaging plate 160 relative to the gauge body 190.

A bearing 272 is disposed within the body aperture 190D, surrounding a portion 274 of the shaft system 210. The bearing 272 may be a roller bearing.

The gauge body 190 is hat-shaped such that the base 190C has a base perimeter P1 that is sized to be larger than a rim diameter D1 defined by a rest of the gauge body 190. In the illustrated embodiment the base 190C has a square shape, but that is not intended on limiting the scope of the embodiments. This configuration enables the seating of fasteners 276, such as bolts, that fix the gauge body 190 to the gearbox housing 130.

The shaft system 210 defines a flange 280. The flange 280 remains located within the cavity 190F when the engaging plate 160 is biased against the front end 120A of the bevel gear 120. The biasing member 270 is a spring 290 disposed within the cavity 190F. The spring 290 extends between the base 190C of the gauge body 190 and the flange 280. A forward thrust bearing 300A is disposed within the cavity 190F, between the spring 290 and the base 190C of the gauge body 190. An aft thrust bearing 300B is disposed within the cavity 190F, between the spring 290 and the flange 280. The thrust bearings enable turning of the shaft system 210 to not result in turning of the spring 290.

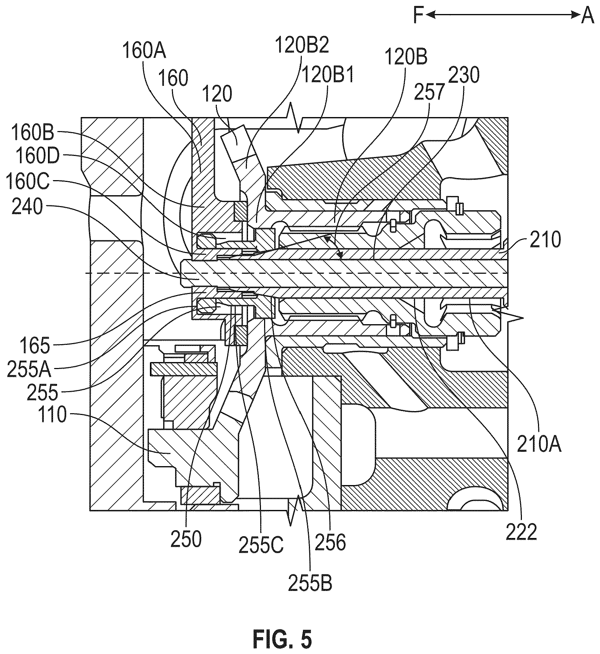

Turning to FIG. 5, the second portion 250 of the front end 230 of the shaft system 210 is a radially expandable stub shaft 255 extending from a forward stub shaft flange 255A to an aft stub shaft flange 255B, with a sidewall 255C extending therebetween. The forward stub shaft flange 255A is supported by the engaging plate 160. The aft stub shaft flange 255B engages the bevel gear shaft 120B of the bevel gear 120 when the engaging plate 160 is biased against the front end 120A of the bevel gear 120. This configuration biases the bevel gear 120 toward the ring bevel gear 110. More specifically, the aft stub shaft flange 255B engages the front end 120B1 of the bevel gear shaft 120B, which is where the gears 120B2 of the bevel gear 120 are joined with the bevel gear shaft 120B. This directly transfers reaction forces from the aft stub shaft flange 255B to the gears 120B2 of the bevel gear 120.

The engaging plate 160 includes a plate base 160A that is planar. The engaging plate 160 includes an outer plate flange 160B that extends aft of the plate base 160A, and is configured to engage the bevel gear 120, e.g., aligned with the bevel gear shaft 120B. An inner plate flange 160C of the engaging plate 160 extends aft of the plate base 160A and is surrounded by the outer plate flange 160B. The inner plate flange 160C surrounds the threaded plate aperture 165. The outer plate flange 160B and the inner plate flange 160C are each shaped as an annular ring. A plate cavity 160D is disposed, or defined, between the outer plate flange 160B and the inner plate flange 160C. The forward stub shaft flange 255A of the stub shaft 255 is supported within the plate cavity 160D. For example, the stub shaft 255 is lowered into the gearbox housing 130 using the connecting member 140 by holding the stub shaft 255 in the plate cavity 160D until it is positioned against the bevel gear 120.

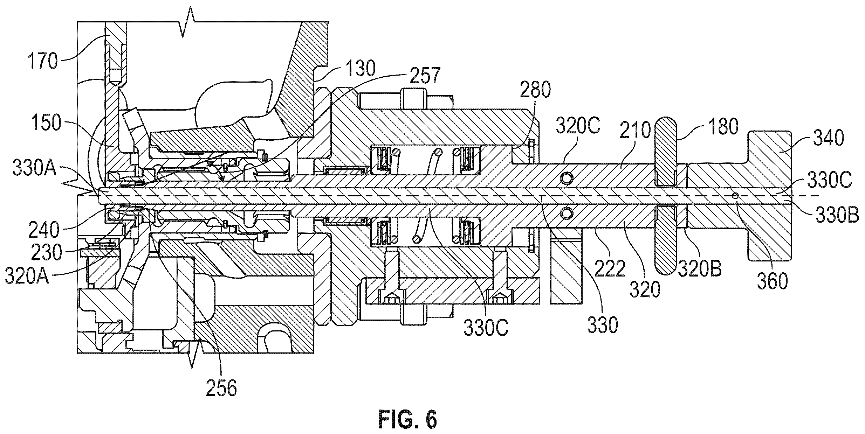

Turning to FIG. 6, the sidewall 222 of the shaft system 210 defines an outer surface 210A. A third portion (tapered portion of the outer surface 210A) 256 of the forward end 230 of the shaft system 210 that is aft of the first portion 240 (the threaded front end) defines a taper angle 257 that narrows toward the first portion 240. When the aft end 220 of the shaft system 210 is rotated, and the first portion 240 of the shaft system 210 engages the threaded plate aperture 165 of the engaging plate 160, the shaft system 210 is biased forward, e.g., axially. From this configuration, the third portion 256 of the forward end 230 of the shaft system 210 engages the aft stub shaft flange 255B. The aft stub shaft flange 255B is urged radially outwardly, and gradually engages the bevel gear shaft 120B of the bevel gear 120 due to the taper angle 257, to gradually bias the bevel gear 120 toward the ring bevel gear 110.

More specifically, the shaft system 210 includes an outer shaft 320 that extends from an outer shaft forward end 320A to an outer shaft aft end 320B with an outer surface 320C therebetween. The outer surface 320C is defined by the sidewall 222 of the shaft system 210. The flange 280 extends radially outwardly from the outer surface 320C. The shaft forward end 320A defines the third portion (tapered portion) 256 of the forward end 230 of the shaft system 210.

An inner shaft 330 that extends from an inner shaft forward end 330A to an inner shaft aft end 330B, with an inner shaft sidewall 330C therebetween. The inner shaft 330 extends through the outer shaft 320 and is fixed to the outer shaft 320. The inner shaft 330 is longer than the outer shaft 320, such that the inner shaft forward end 330A extends forward of the outer shaft forward end 320A and defines the threaded front end 230, e.g., the first portion 240 of the shaft system 210.

The inner shaft aft end 330B extends aft of the outer shaft aft end 320B to define a shaft aft extension 330C. The turn knob 340 is connected to the shaft aft extension 330C, to rotate the shaft system 210. This configuration biases the engaging plate 160 against the front end 120A of the bevel gear 120.

In one embodiment, the turn knob 340 and the inner shaft aft end 330C are connected to each other via a pin or set screw 360.

In one embodiment, the lower portion 150 and the upper portion 170 of the connecting member 140 are detachable from each other. This enables accommodating different sized gearboxes 26.

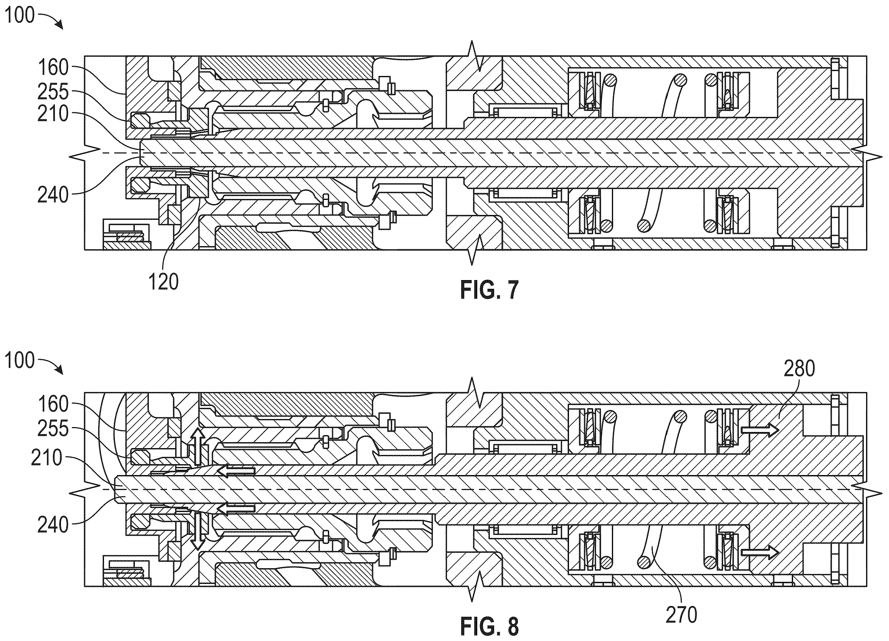

As shown in FIG. 7, with the system 100 installed against the gearbox 26, the threaded front end 230 of the shaft system 210 is not fully engaged the engaging plate 160. At this time, the engaging plate 160 and stub shaft 255 are in position to engage the bevel gear 120. In FIG. 8, the threaded front end 230 of the shaft system 210 has engaged the engaging plate 160. The stub shaft 255 has engaged the bevel gear 120. The biasing member 270 is providing a stabilizing reaction force against the flange 280 of the shaft system 210. As shown in FIG. 3 the ring bevel gear 110 is held steady while the handle 180 is pivoted to identify backlash between the ring bevel gear 110 and the bevel gear 120, which is measured via the sensor 260.

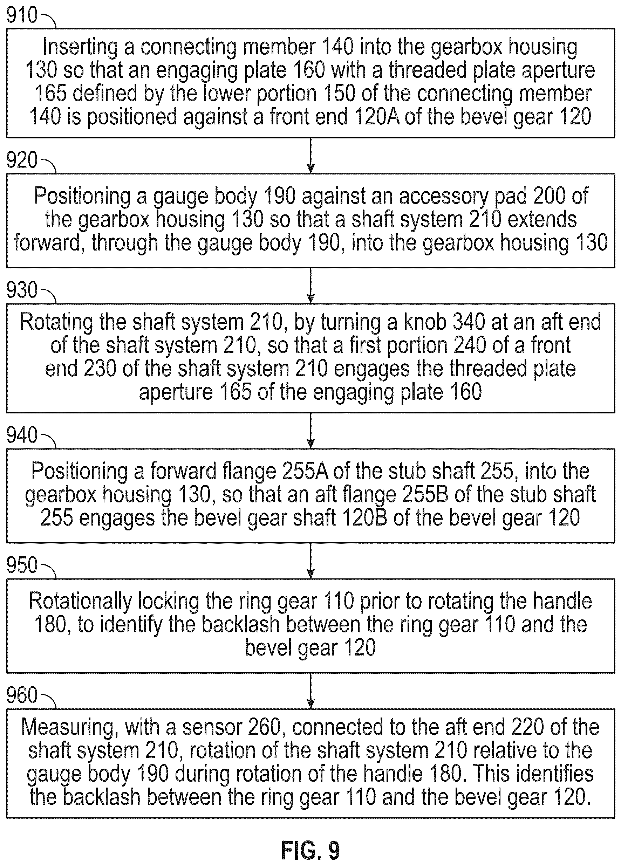

Turning to FIG. 9, a flowchart shows a method of measuring a backlash between a ring bevel gear 110 and bevel gear 120 within a gearbox housing 130 of a gas turbine engine 20. As shown in block 910, the method includes inserting a connecting member 140 into the gearbox housing 130 so that an engaging plate 160 with a threaded plate aperture 165 defined by the lower portion 150 of the connecting member 140 is positioned against a front end 120A of the bevel gear 120.

As shown in block 920, the method includes positioning a gauge body 190 against an accessory pad 200 of the gearbox housing 130 so that a shaft system 210 extends forward, through the gauge body 190, into the gearbox housing 130.

As shown in block 930, the method includes rotating the shaft system 210, by turning a knob 340 at an aft end of the shaft system 210, so that a first portion 240 of a front end 230 of the shaft system 210 engages the threaded plate aperture 165 of the engaging plate 160. From this configuration, the engaging plate 160 is biased against the front end 120A of the bevel gear 120, and a second portion 250 (the stub shaft 255) of the shaft system 210 engages a bevel gear shaft 120B of the bevel gear 120. This biases the bevel gear 120 is against the ring bevel gear 110.

As shown in block 940, inserting a connecting member 140 into the gearbox housing 130 includes positioning a forward flange 255A of the radially expandable stub shaft 255, that is defined by the second portion 250 of the shaft system 210, and that is supported by the engaging plate 160 into the gearbox housing 130. From this configuration, an aft flange 255B of the radially expandable stub shaft 255 engages the bevel gear shaft 120B of the bevel gear 120.

As shown in block 950, the method includes rotationally locking the ring bevel gear 110 prior to rotating the handle 180, to identify the backlash between the ring bevel gear 110 and the bevel gear 120.

As shown in block 960, the method includes measuring, with a sensor 260, connected to the aft end 220 of the shaft system 210, rotation of the shaft system 210 relative to the gauge body 190 during rotation of the handle 180. This identifies the backlash between the ring bevel gear 110 and the bevel gear 120.

As indicated above, the embodiments provide backlash system 100, otherwise referred to as a backlash gauge, having a gauge body and a connecting member. The gauge body is installed outside of the gearbox, onto the accessory pad, and is positioned through an internal diameter of the bevel gear. The connecting member is positioned on the inside of the gearbox and secured in place by connecting with a forward end of a shaft, via, e.g., a threaded connection or joint. Turning a knob at the aft end of the shaft activates an expandable stub shaft which secures the gauge to the rotationally free bevel gear. Such torquing applies required axial load on the bevel gear by the loading spring placed inside the gauge body. Once the connecting member is fully engaged with the handle, an axial position of the bevel gear is set, and the gauge is considered installed and ready for backlash measurements. Backlash is measured by rotational motion of rotationally free bevel gear, while the mating ring bevel gear is restrained from rotation. The system has an external radial arm with inspection point, i.e., the identified sensor. The indicator of the sensor is positioned such that a probe contacts the inspection point and measures rotational movement of the bevel gear due to gear backlash.

The system minimizes a risk of improper backlash reading resulting from improper axial gear positioning of the components and allows use of the system on other gearboxes with different geometries. This is achieved by an expandable stub shaft that ensures attachment of the system to the rotationally free bevel gear, an integration of a backlash measurement and a gear loading capability in a single gauge assembly, and an expandable mechanism and spring load application that are enabled after a forward end of a rod (or shaft)(mates with the connection plate, by replaceable items of the gauge, including the shim plate and the engaging plate, which makes it applicable for multiple configurations of gearsets and gearbox housings.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system (100) for measuring a backlash between a ring bevel gear (110) and bevel gear (120) within a gearbox housing (130) of a gas turbine engine (20), the system (100) comprising:
a connecting member (140) having: a lower portion (150) defining an engaging plate (160) with a threaded plate aperture (165), wherein the lower portion (150) is configured for being positioned against a front end (120A) of the bevel gear (120); and an upper portion (170) defining a grippable tool for installation of the engaging plate (160);
a gauge body (190) configured for being positioned against an accessory pad (200) of the gearbox housing (130);
a shaft system (210) configured for extending forward, through the gauge body (190), into the gearbox housing (130), the shaft system (210) having an aft end (220), a front end (230), and a sidewall (222) therebetween, wherein:
the aft end (220) of the shaft system (210) extends aft of the gauge body (190), wherein the aft end (220) is engageable to rotate the shaft system (210); and
the front end (230) of the shaft system (210) has:
a first portion (240) that is threaded and configured to engage the threaded plate aperture (165) of the engaging plate (160) when the shaft system (210) is rotated, to bias the engaging plate (160) against the front end (120A) of the bevel gear (120); and
a second portion (250) configured to engage a bevel gear shaft (120B) of the bevel gear (120) when the engaging plate (160) is biased against the front end (120A) of the bevel gear (120), and thereby bias the bevel gear (120) against the ring bevel gear (110); and
a sensor (260), connected to the aft end (220) of the shaft system (210), configured to measure rotation of the shaft system (210) relative to the gauge body (190) during rotation of a handle (180), indicative of the backlash between the ring bevel gear (110) and the bevel gear (120).

2. The system (100) of claim 1, wherein, in operation, when the second portion (250) of the front end (230) of the shaft system (210) engages the bevel gear shaft (120B), rotation of the handle (180) enables identifying the backlash between the ring bevel gear (110) and the bevel gear (120).

3. The system (100) of claim 1 or 2, wherein the gauge body (190) is cup-shaped or hat-shaped and extends from a body forward end (190A) to a body aft end (190B), with a body sidewall (190A1) therebetween, the body forward end (190A) defines a base (190C) with a body aperture (190D) and the body aft end (190B) defines an annular rim (190E), whereby the gauge body (190) defines a cavity (190F), wherein the base (190C) is configured for being positioned against the accessory pad (200) of the gearbox housing (130) and the shaft system (210) is configured to extend through the threaded plate aperture (165), and a biasing member (270) is disposed in the cavity (190F) to bias the shaft system (210) in an aft direction when the engaging plate (160) is biased against the front end (120A) of the bevel gear (120),
optionally, wherein the system (100) includes a bearing (272) disposed within the body aperture (190D), surrounding a portion of the shaft system (210).

4. The system (100) of claim 3, wherein the gauge body (190) is hat-shaped such that the base (190C) has a base perimeter (P1) that is larger than a rim diameter (D1) defined by the rest of the gauge body (190) to seat fasteners (276) that fix the gauge body (190) to the gearbox housing (130).

5. The system (100) of claim 3 or 4, wherein:
the shaft system (210) defines a flange (280) that is located within the cavity (190F) when the engaging plate (160) is biased against the front end (120A) of the bevel gear (110); and
the biasing member (270) is a spring (290) disposed within the cavity (190F), extending between the base (190C) of the gauge body (190) and the flange (280).

6. The system (100) of claim 5, including:
a forward thrust bearing (300A) disposed within the cavity (190F), between the spring (290) and the base (190C) of the gauge body (190); and
an aft thrust bearing (300B) disposed within the cavity (190F), between the spring (290) and the flange (280).

7. The system (100) of any preceding claim, wherein:
the second portion (250) of the front end (230) of the shaft system (210) is a radially expandable stub shaft (255) extending from a forward stub shaft flange (255A) to an aft stub shaft flange (255B), with a sidewall (255C) extending therebetween;
the forward stub shaft flange (255A) is supported by the engaging plate (160); and
the aft stub shaft flange (255B) engages the bevel gear shaft (120B) of the bevel gear (120) when the engaging plate (160) is biased against the front end (120A) of the bevel gear (120), to bias the bevel gear (120) toward the ring bevel gear (110).

8. The system (100) of claim 7, wherein the engaging plate (160) includes:
a plate base (160A) that is planar;
an outer plate flange (160B) extending aft of the plate base (160A) and is configured to engage the bevel gear (120); and
an inner plate flange (160C) extending aft of the plate base (160A) and surrounded by the outer plate flange (160B), wherein:
the inner plate flange (160C) surrounds the threaded plate aperture (165);
the outer plate flange (160B) and the inner plate flange (160C) are each shaped as an annular ring, and a plate cavity (160D) is disposed between the outer plate flange (160B) and the inner plate flange (160C); and
the forward stub shaft flange (255A) is supported within the plate cavity (160D).

9. The system (100) of claim 7 or 8, wherein:
the sidewall (222) of the shaft system (210) defines an outer surface (210A), wherein a third portion (256) of a forward end (230) of the shaft system (210) that is aft of the first portion (240) defines a taper angle (257) that narrows toward the first portion (240); and
when the aft end (220) of the shaft system (210) is rotated, and the first portion (240) of the shaft system (210) engages the threaded plate aperture (165) of the engaging plate (160), the shaft system (210) is biased forward, whereby the third portion (256) of the forward end (230) of the shaft system (210) engages the aft stub shaft flange (255B), and whereby the aft stub shaft flange (255B) gradually engages the bevel gear shaft (120B) of the bevel gear (120) due to the taper angle (257), to gradually bias the bevel gear (120) toward the ring bevel gear (110).

10. The system (100) of claim 9, wherein the shaft system (210) includes:
an outer shaft (320) that extends from an outer shaft forward end (320A) to an outer shaft aft end (320B) with an outer surface (320C) therebetween defined by the sidewall (222) of the shaft system (210), and a flange (280) extends outwardly from the outer surface (320C), wherein the outer shaft forward end (320A) defines the third portion (256) of a forward end (230) of the shaft system (210), to thereby define the taper angle (257); and
an inner shaft (330) that extends from an inner shaft forward end (330A) to an inner shaft aft end (330B), with an inner shaft sidewall (330C) therebetween, wherein the inner shaft (330) extends through the outer shaft (320) and is fixed to the outer shaft (320), and the inner shaft (330) is longer than the outer shaft (320), such that the inner shaft forward end (330A) extends forward of the outer shaft forward end (320A) and defines the first portion (240) of the shaft system (210).

11. The system (100) of claim 10, wherein:
the inner shaft aft end (330B) extends aft of the outer shaft aft end (320B) to define a shaft aft extension (330C); and
a turn knob (340) is connected to the shaft aft extension (330C) to rotate the shaft system (210), to bias the engaging plate (160) against the front end of the bevel gear (120),
optionally, wherein the turn knob (340) and the inner shaft aft end (330B) are connected to each other via a pin.

12. The system (100) of any preceding claim, wherein the lower portion (150) and the upper portion (170) of the connecting member (140) are detachable from each other.

13. A method of measuring a backlash between a ring bevel gear (110) and bevel gear (120) within a gearbox housing (130) of a gas turbine engine (20), the method comprising:
inserting a connecting member (140) into the gearbox housing (130) so that an engaging plate (160) with a threaded plate aperture (165) defined by a lower portion (150) of the connecting member (140) is positioned against a front end (120A) of the bevel gear (120); and positioning a gauge body (190) against an accessory pad (200) of the gearbox housing (130) or against a shim plate (202) disposed against the accessory pad (200) so that a shaft system (210) extends forward, through the gauge body (190), into the gearbox housing (130);
rotating the shaft system (210) so that a first portion (240) of a front end (230) of the shaft system (210) engages the threaded plate aperture (165) of the engaging plate (160), whereby:
the engaging plate (160) is biased against the front end (120A) of the bevel gear (120); and
a second portion (250) of the shaft system (210) engages a bevel gear shaft (120B) of the bevel gear (120), thereby biasing the bevel gear (120) against the ring bevel gear (110); and
measuring, with a sensor (260), connected to an aft end (220) of the shaft system (210), rotation of the shaft system (210) relative to the gauge body (190) during rotation of the handle (180), to identify the backlash between the ring bevel gear (110) and the bevel gear (120).

14. The method of claim 13, including turning a knob (340) at the aft end (220) of the shaft system (210) to rotate the shaft system (210).

15. The method of claim 13 or 14, wherein:
inserting the connecting member (140) into the gearbox housing (130) includes positioning a forward flange (255A) of a radially expandable stub shaft (255), that is defined by the second portion (250) of the shaft system (210), and that is supported by the engaging plate (160) into the gearbox housing (130) so that an aft flange (255B) of the radially expandable stub shaft (255) engages the bevel gear shaft (120B) of the bevel gear (120); and/or
the method includes rotationally locking the ring bevel gear (110) prior to rotating the handle (180), to identify the backlash between the ring bevel gear (110) and the bevel gear (120).
